# EUROPÄISCHE PATENTSCHRIFT

(11) **EP 2 181 494 B1**
(45) Veröffentlichungstag und Bekanntmachung des Hinweises auf die Patenterteilung: **30.11.2016**
(21) Anmeldenummer: 08787091.1
(22) Anmeldetag: 11.08.2008
(51) Int. Cl.: H02K 3/52

(54) **STATOR EINER ELEKTRISCHEN MASCHINE**
STATOR OF AN ELECTRICAL MACHINE
STATOR D'UNE MACHINE ÉLECTRIQUE

(30) Priorität: 17.08.2007 DE 102007038988
(43) Veröffentlichungstag der Anmeldung: 05.05.2010
(73) Patentinhaber: Robert Bosch GmbH, 70442 Stuttgart (DE)
(72) Erfinder: ELSER, Armin, 73553 Alfdorf-Pfahlbronn (DE)
(86) Internationale Anmeldenummer: PCT/EP2008/060517
(87) Internationale Veröffentlichungsnummer: WO 2009/024494

(56) Entgegenhaltungen:
- EP-A- 0 817 282
- DE-A1- 10 035 540
- FR-A- 2 814 295
- GB-A- 1 512 894
- JP-A- 2000 341 897
- US-A- 3 339 097
- US-A- 4 633 114
- US-A- 4 874 977
- US-A1- 2003 111 914
- US-B1- 6 177 741

## Beschreibung

Die Erfindung betrifft einen Stator einer elektrischen Maschine nach Oberbegriff des Anspruchs 1.

### Stand der Technik

Statoren elektrischer Maschinen können prinzipiell auf zwei Weisen gewickelt werden. Einmal ist es möglich, die Wicklungen nacheinander abfolgend auf isolierte, einzelne Statorzähne aufzubringen, und weiter ist es möglich, außerhalb des Stators gewickelte Spulen auf Statorzähne des Stators zu fügen. Werden die Spulen direkt auf die Statorzähne gewickelt, müssen ihre Windungen am Abgleiten vom Statorzahn gehindert werden. Dies geschieht beispielsweise dadurch, dass die Statorzähne in ihrem Kopfbereich einen größeren Querschnitt als im Wurzelbereich aufweisen, um so die Spulenwindungen auf dem Zahn zu fixieren. Dies Methode begrenzt den erreichbaren Kupfer-Füllfaktor erheblich, es können also nicht so viele Windungen eingebracht werden, wie möglicherweise für die Erreichung eines bestimmten magnetischen Flusses beziehungsweise einer bestimmten magnetischen Felddichte erforderlich ist. In einer anderen Ausbildung dieser Fertigungsmethode werden die Spulenwindungen auf einen Einzelzahn gewickelt, der bereits isoliert ist. Der Stator wird sodann aus den bewickelten Einzelzähnen zusammengesetzt, beispielsweise am Außendurchmesser verschweißt. Diese Fertigungsmethode ist sehr aufwendig und anfällig für Produktionsfehler. Aus der EP 0 891 030 A2 ist bekannt, für Statorzähne ohne kopfseitige Querschnittsvergrößerung (mit im Wesentlichen parallel laufenden Zahnwandungen) Spulen von unterschiedlicher Geometrie vorzusehen, wobei Spulen der einen Geometrie auf den einen, Spulen der anderen Geometrie auf den nächstfolgenden Zahn aufgebracht werden, nachdem diese außerhalb des Stators gewickelt, in Form gepresst und mittels eines thermoplastischen Kunstharzes vor Einbringung in den Stator in Form gehalten werden. Hieran ist der sehr komplizierte und fehleranfällige Spulenwickelvorgang nachteilig, da die erforderliche Spulengeometrie sehr genau getroffen werden muss, widrigenfalls ein Einbringen auf die Statorzähne nicht oder nur unter Beeinträchtigung der Spulengeometrie möglich ist, was im ursprünglichen Fall in der Zerstörung der Spule endet. Weiter ist nachteilig, dass Spulen mit unterschiedlicher Geometrie verwendet werden müssen.

Aus der US 3339097 A, FR 2814295 A, US4874977 A, US 4633114 A und JP 2000341897 A sind Statoren einer elektrischen Maschine bekannt, die Statorzähne aufweisen, auf denen Spulenträger mittels eines Formschlusses befestigt sind.

### Offenbarung der Erfindung

Aufgabe der Erfindung ist es, einen Stator einer elektrischen Maschine bereitzustellen, der mit außerhalb des Stators gewickelten Spulen einen möglichst hohen Kupfer-Füllgrad und damit eine möglichst hohe magnetische Flussdichte erreicht und hierbei eine einfache, preisgünstige Herstellung bei sehr hoher Betriebssicherheit gewährleistet. Hierzu wird ein Stator einer elektrischen Maschine vorgeschlagen, gemäß Ansruch 1.

Der Spulenträger ist erfindungsgemäß in seinem Wurzelbereich durch mindestens einen weiteren Formschluss am Stator gehalten. Durch die Ausbildung dieses mindestens einen weiteren Formschlusses lässt sich die Fixierung des Spulenträgers auf dem Statorzahn noch einmal verbessern. Insbesondere wird hierdurch erreicht, dass der Spulenträger auch in seinem Wurzelbereich gehalten ist, und somit unterschiedliche Haltepunkte über seine Ausdehnung hin existieren. Auf diese Weise werden Haltekräfte über die ganze Ausdehnung des Spulenträgers aufgebracht, die einem Abgleiten des Spulenträgers vom Statorzahn entgegenwirken. So lassen sich unerwünschte Eigenvibrationen und Ähnliches wirksam vermeiden, und hierdurch die Stabilität der Fixierung deutlich erhöhen.

Außerdem weist der Spulenträger erfindungsgemäß zur Bildung des weiteren Formschlusses einen Schnapphaken auf, der in einer Aufnahme des Stators einrastbar ist. Mittels eines in einer Aufnahme einrastbaren Schnapphakens lässt sich eine weitere, selbstwirkende, besonders einfache und sichere Möglichkeit zur Ausbildung eines Formschlusses darstellen. Der Schnapphaken kann beispielsweise als federndes Teil einstückig zum Spulenträger ausgebildet sein, insbesondere aus demselben Kunststoffmaterial im Fertigungsprozess des Spulenträgers als solchem hergestellt werden. Zur Ausbildung des Formschlusses ist weiter eine Aufnahme am Stator vorgesehen, die mit dem Schnapphaken zusammenwirkt, insbesondere sein Einrasten in Einbauendlage des Spulenträgers zulässt.

Darüber hinaus ist die Aufnahme erfindungsgemäß an einem Verschaltungsring des Stators ausgebildet. Statoren weisen Verschaltungsringe auf, die der Kontaktierung der einzelnen Spulen untereinander beziehungsweise mit den notwendigen elektrischen Anschlüssen dienen. Diese Verschaltungsringe sind üblicherweise aus einem Isolierstoff ausgebildet, der ein direktes Aufbringen der elektrisch leitenden Kontakte und/oder Spulendrähte erlaubt, ohne weitere Isolierungen vorsehen zu müssen. An einem solchen Verschaltungsring lässt sich leicht die Aufnahme für den Schnapphaken anordnen, beispielsweise dadurch, dass bei der Herstellung des Verschaltungsrings aus einem Kunststoffmaterial die Aufnahme mithergestellt wird, beispielsweise angespritzt oder mitangeformt, oder als eine Ausnehmung in einem Bereich des Verschaltungsrings.

In einer anderen Ausführungsform weist der Statorzahn im Kopfbereich an seiner Zahnflanke mindestens eine zum Formschluss gehörige Hinterschneidung auf. Der Statorzahn hat folglich an seiner Zahnflanke, die umlaufend oder in der Form mit mehreren Zahnseiten ausgebildet sein kann, folglich mindestens eine Ausnehmung, die als Hinterschneidung ausgebildet ist. Diese Hinterschneidung gehört funktionell zum Formschluss. Diese kann beispielsweise so ausgebildet sein, dass im Kopfbereich an der Zahnflanke eine axial durchlaufende Hinterschneidung oder Einkerbung besteht.

In einer weiteren, bevorzugten Ausführungsform weist der Spulenträger mindestens eine in die Hinterschneidung eintretende Rastnase auf. Diese Rastnase gehört hierbei zum Formschluss, und erlaubt dessen selbstwirkende Herstellung durch bloßes Aufschieben. Rastnase und Hinterscheidung sind hierbei so angeordnet, dass sie beim Aufschieben des Spulenträgers auf den Statorzahn zwangsläufig in der beabsichtigten Einbauendlage ineinandergreifen. Die Rastnase ist beispielsweise am Spulenträger federnd ausgebildet, sodass sie beim Aufschieben auf den Statorzahn von der Zahnflanke in Richtung der Spulenwicklung zurückgedrückt wird, um beim Erreichen der Hinterschneidung wieder hervorzutreten und in die Hinterschneidung einzurasten. Auf diese Weise ist eine selbstwirkende, sichere und billige Herstellung des Formschlusses zur Fixierung des Spulenträgers auf dem Statorzahn möglich.

In einer weiteren Ausführungsform ist die Aufnahme in Form eines Auges ausgebildet. Hiermit ist gemeint, dass die Aufnahme über Bereiche des Stators und/oder des Verschaltungsrings geringfügig übersteht, insbesondere in Radialrichtung übersteht, und hierbei ein Auge etwa in Form eines mit seiner offenen Seite an dem Verschaltungsring aufgebrachten, umgekehrten "U", ausbildet, also eine Ausnehmung, die von einer umlaufenden, geschlossenen Außenkontur umgriffen ist. Das Auge dient hierbei dem Umgreifen und Abstützen des Schnapphakens, der Schnapphaken durchdringt hierbei das Auge und rastet nach dem Durchdringen des Auges an dessen Außenkontur ein, insbesondere rückseitig.

Weiter wird eine elektrische Maschine mit einem Stator nach einem oder mehreren der vorhergehenden Ansprüche vorgeschlagen. Mit einem solchen Stator versehene Maschinen weisen eine besonders hohe Effizienz auf, da der Stator die Aufbringung einer hohen magnetischen Flussdichte gestattet. Diese Maschinen sind gleichzeitig günstig herstellbar und sehr betriebssicher, da die Statorwicklungen sicher auf den Statorzähnen fixiert sind, wodurch Ausfälle durch Spulenschäden verringert werden. Gleichzeitig sind die Spulen auf einfache Weise durch Lösen des Formschlusses, also insbesondere des Schnapphakens aus der Aufnahme beziehungsweise der Rastnase aus der Hinterschneidung, im Servicefall leicht lösbar und durch Ersatzteile zu ersetzen.

Weitere vorteilhafte Ausführungsformen ergeben sich aus den Unteransprüchen uns aus Kombinationen derselben.

### Kurze Beschreibung der Zeichnungen

Die Erfindung wird nachfolgend anhand von Ausführungsbeispielen näher erläutert.

Es zeigen
- Figur 1: ein Statorsegment mit bewickelten Statorzähnen in Querschnittsdarstellung,
- Figur 2: eine abschnittsweise Querschnittsdarstellung eines Kopfbereiches eines Statorzahns mit unbewickeltem Spulenträger und
- Figur 3: eine abschnittsweise, perspektivische Aufsichtsdarstellung eines Stators mit einem am Verschaltungsring ausgebildeten Schnapphaken.

### Ausführungsform(en) der Erfindung

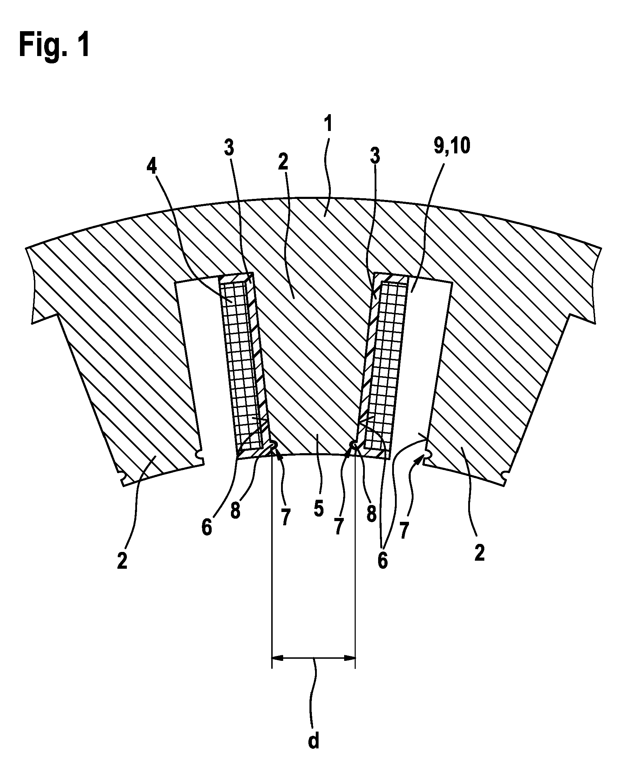

Figur 1 zeigt eine abschnittsweise Querschnittsdarstellung eines hohlen Stators 1 einer nicht näher dargestellten elektrischen Maschine. Dieser weist innenseitig Statorzähne 2 auf, auf die ein Spulenträger 3 vollständig aufgeschoben ist, dessen Längsausrichtung im Wesentlichen gleich der des Statorzahns 2 ist. Der Spulenträger 3 trägt eine Spule 4, die bevorzugt außerhalb des Stators auf den Spulenträger 3 gewickelt wurde. Der Spulenträger 3 ist hierbei so ausgebildet dass er den Statorzahn 2 vollständig, allseitig umgreift. Er ist gewissermaßen in der Form von aus anderen Bereichen der Technik bekannten Spulenkernen ausgebildet, mit der Maßgabe, dass seine Innengeometrie der Geometrie des Statorzahns 2 derart angepasst ist, dass er auf diesen vollständig aufgeschoben werden kann. Der Statorzahn 2 weist in seinem Kopfbereich 5 an sich gegenüberliegenden Zahnflanken 6 jeweils eine Hinterschneidung 7 auf, in die eine Rastnase 8 eingreift, die innenseitig am Spulenträger 3 ausgebildet ist, also so, dass sie den im Kopfbereich 5 des Statorzahns 2 relevanten Innendurchmesser d des Spulenträgers 3 nach innen überragt. Beim Aufschieben des Spulenträgers 3 rastet die Rastnase 8 in die Hinterschneidung 7 am Statorzann 2 ein und fixiert den Spulenträger in der gezeigten Einbauendlage, also dergestalt, dass der Spulenträger 3 nicht von dem Statorzahn 2 entgegen der Einschieberichtung abrutschen kann. Durch die Ausgestaltung der Spule 4 auf einem Spulenträger 3, der nach dem Wickeln der Spule 4 auf den Statorzahn 2 aufgeschoben wird, ergibt sich die Möglichkeit, den Spulenträger 3 maximal zu bewickeln, so dass sich benachbarte Spulen 4 an sich benachbarten Statorzähnen 2 so ausbilden lassen, dass der zur Verfügung stehende Wickelraum 9, der im weitesten Sinne als Statorzahnzwischenraum 10 zu sehen ist, möglichst vollständig mit Spulen 4 gefüllt werden kann, so dass sich die Möglichkeit der Erreichung einer hohen elektromagnetischen Felddichte an dem Stator 1 ergibt. Anders als im Stand der Technik ist es also möglich, Statorzähne 2 mit einem zu ihrem Kopfbereich 5 hin sich verjüngenden Querschnitt zu verwenden, wodurch der zwischen den Statorzähnen 2 befindliche Statorzahnzwischenraum 10 größer wird und somit eine größere Spule 4 mit mehr Windungen eingebracht werden kann, wodurch sich die magnetische Felddichte sehr vorteilhaft erhöhen lässt.

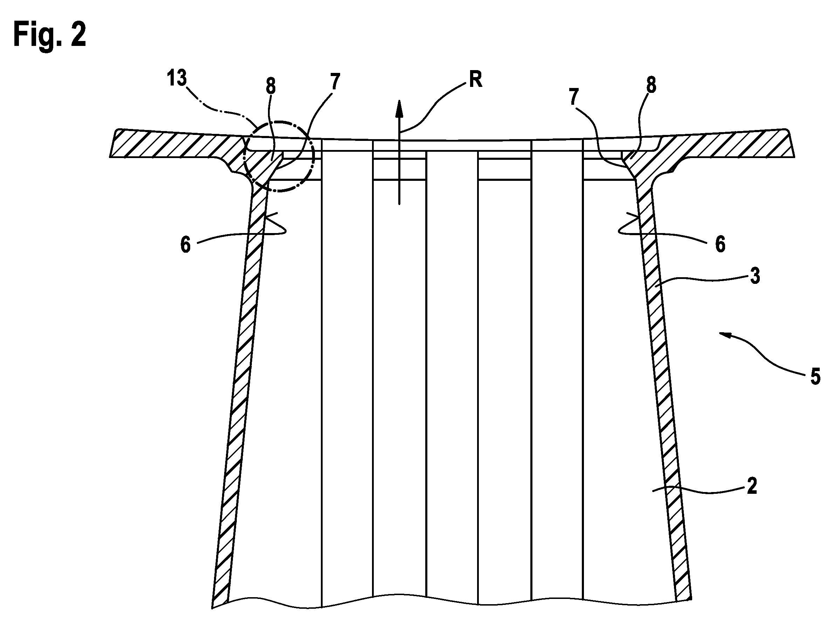

Figur 2 zeigt den Kopfbereich 5 des Statorzahns 2 mit einem aufgeschobenen Spulenträger 3, der jedoch nicht bewickelt ist, also keine Spulenwicklung aufweist. In dem Kopfbereich 5 des Statorzahns 2 ist die Hinterschneidung 7 zur Aufnahme der an dem Spulenträger 3 im Kopfbereich ausgebildeten Rastnase 8 angeordnet, nämlich an der Zahnflanke 6 des Statorzahns 2. Rastnase 8 und Hinterschneidung 7 ergeben im dargestellten, eingefügten Zustand einen Formschluss 13, der das radiale Abgleiten in Richtung R des Spulenträgers 3 von dem Statorzahn 2 verhindert.

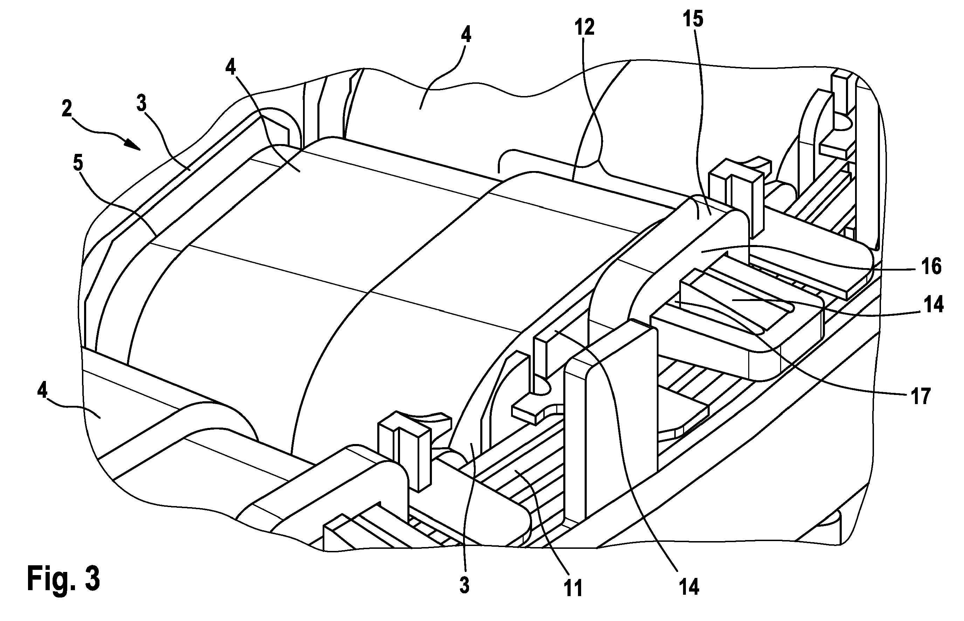

Figur 3 zeigt eine abschnittsweise, perspektivische Aufsichtsdarstellung desselben Stators 1 mit einem außenumfangsseitig am Stator 1 angeordneten Verschaltungsring 11 zur elektrischen Verschaltung der Spulen 4 und auf Statorzähne 2 aufgeschobene, mit Spulen 4 bewickelte Spulenträger 3. In einem Wurzelbereich 12 des Spulenträgers 3, der dem Verschaltungsring 11 benachbart und entfernt zum Kopfbereich 5 liegt, ist zur Ausbildung eines Formschlusses 13 zwischen dem Spulenträger 3 und dem an dem Stator 1 angeordneten Verschaltungsring 11 an dem Spulenträger 3 ein Schnapphaken 14 ausgebildet, der sich in Radialrichtung außenumfangsseitig einer Grundplatte 14 des Spulenträgers 3 hinaus erstreckt. Im dargestellten eingebauten Zustand durchgreift der Schnapphaken 14 eine im Wesentlichen quer zu ihm stehende, an dem Verschaltungsring 11 zur Aufnahme des Schnapphakens 14 angeordnete Aufnahme 15, die beispielsweise in Form eines umgedrehten U ausgebildet ist und zusammen mit dem Verschaltungsring 11 ein Auge 17 ausbildet, das ein Durchgreifen des Schnapphakens 14 gestattet, wobei in Einbauendlage, also in Endstellung des Durchgreifens, der Schnapphaken 14 beispielsweise durch eine diesem immanente Federkraft, wie sie etwa durch Materialwahl und -ausgestaltung erzielbar ist, hinter der Aufnahme 15 in einem Abstützbereich 16 der Aufnahme 15 für den Schnapphaken 14 einrastet. Hierdurch wird vermieden, dass der Spulenträger 3 in Radialrichtung, also entgegen der zuvor beschriebenen Einschubrichtung auf dem Statorzahn 2, wieder von dem Statorzahn 2 abgleiten kann. Der Schnapphaken 14 und die Aufnahme 15 bilden somit einen Formschluss zum radialen Halten des Spulenträgers 3 auf dem Statorzahn 2 aus. Erfindungsgemäß ist jedem Spulenträger 3 des Stators 1 ein solcher Formschluss 13 zugeordnet.

## Patentansprüche

1. Stator einer elektrischen Maschine, mit mindestens einem Statorzahn und einer außerhalb des Stators gewickelten Spule, die auf den Statorzahn im Wesentlichen radial aufgeschoben ist, wobei die Spule (4) mittels mindestens eines Formschlusses (13) auf dem Statorzahn (2) radial gehalten ist, wobei die Spule (4) auf einen Spulenträger (3) gewickelt ist und dass der Formschluss (13) zwischen Spulenträger (3) und Stator (1) ausgebildet ist, **dadurch gekennzeichnet, dass** der Spulenträger (3) in seinem Wurzelbereich (12) durch mindestens einen weiteren Formschluss (13) am Stator (1) gehalten ist, wobei der Spulenträger (3) zur Bildung des weiteren Formschlusses (13) einen Schnapphaken (14) aufweist, der in einer Aufnahme (15) des Stators (1) einrastbar ist, wobei die Aufnahme (15) an einem Verschaltungsring (11) des Stators (1) ausgebildet ist.

2. Stator nach Anspruch 1, **dadurch gekennzeichnet, dass** der Statorzahn (2) im Kopfbereich (5) an seiner Zahnflanke (6) mindestens eine zum Formschluss (13) gehörige Hinterschneidung (7) aufweist.

3. Stator nach einem der vorhergehenden Ansprüche, **dadurch gekennzeichnet, dass** der Spulenträger (3) mindestens eine in die Hinterschneidung (7) eintretende Rastnase (8) aufweist.

4. Stator nach einem der vorhergehenden Ansprüche, **dadurch gekennzeichnet, dass** die Aufnahme (15) in Form eines Auges (17) ausgebildet ist.

5. Elektrische Maschine mit einem Stator (1) nach einem oder mehreren der vorhergehenden Ansprüche.

## Claims

1. Stator of an electrical machine, comprising at least one stator tooth and one coil which is wound outside the stator and which is substantially radially pushed onto the stator tooth, wherein the coil (4) is radially held on the stator tooth (2) by means of at least one interlocking connection (13), wherein the coil (4) is wound onto a coil former (3) and that the interlocking connection (13) is formed between the coil former (3) and the stator (1), **characterized in that** the coil former (3) is held in its root region (12) on the stator (1) by at least one further interlocking connection (13), wherein the coil former (3) has a snap-action hook (14) for the purpose of forming the further interlocking connection (13), it being possible for the said snap-action hook to latch into a receptacle (15) of the stator (1), wherein the receptacle (15) is formed on an interconnection ring (11) of the stator (1).

2. Stator according to Claim 1, **characterized in that** the stator tooth (2), in the head region (5) on its tooth flank (6), has at least one undercut (7) which is associated with the interlocking connection (13).

3. Stator according to either of the preceding claims, **characterized in that** the coil former (3) has at least one latching lug (8) which enters the undercut (7).

4. Stator according to one of the preceding claims, **characterized in that** the receptacle (15) is in the form of an eye (17).

5. Electrical machine comprising a stator (1) according to one or more of the preceding claims.

## Revendications

1. Stator d'une machine électrique, comportant au moins une dent de stator et une bobine enroulée à l'extérieur du stator, qui est repoussée sensiblement radialement sur la dent de stator, dans lequel la bobine (4) est munie radialement d'au moins une liaison par complémentarité de forme (13) sur la dent de stator (2), dans lequel la bobine (4) est enroulée sur un support de bobine (3) et en ce que la liaison par complémentarité de forme (13) est réalisée entre le support de bobine (3) et le stator (1), **caractérisé en ce que** le support de bobine (3) est maintenu dans la région de sa racine (12) par au moins une autre liaison par complémentarité de forme (13) sur le stator (1), dans lequel le support de bobine (3) comporte, pour former l'autre liaison par complémentarité de forme (13), un crochet d'encliquetage (14) qui peut s'encliqueter dans un évidement (15) du stator (1), dans lequel l'évidement (15) est réalisé sur une bague de connexion (11) du stator (1).

2. Stator selon la revendication 1, **caractérisé en ce que** la dent de stator (2) présente, dans la région de tête (5), sur le flanc (6) de sa dent, au moins une contre-dépouille (7) faisant partie de la liaison par complémentarité de forme (13).

3. Stator selon l'une quelconque des revendications précédentes, **caractérisé en ce que** le support de bobine (3) comporte au moins un ergot d'encliquetage (8) pénétrant dans la contre-dépouille (7).

4. Stator selon l'une quelconque des revendications précédentes, **caractérisé en ce que** l'évidement (15) est réalisé sous la forme d'un oeilleton (17).

5. Machine électrique comportant un stator (1) selon une ou plusieurs des revendications précédentes.
